# EUROPEAN PATENT SPECIFICATION

(11) **EP 3 755 554 B1**
(45) Date of publication and mention of the grant of the patent: **14.12.2022**
(21) Application number: 19711706.2
(22) Date of filing: 18.02.2019
(51) Int. Cl.: B60G 5/01, B60G 17/033, A01G 23/00

(54) **SELF-PROPELLED VEHICLE**
SELBST-ANGETRIEBENES FAHRZEUG
VÉHICULE AUTOMOBILE

(30) Priority: 19.02.2018 IT 201800002803
(43) Date of publication of application: 30.12.2020
(73) Proprietor: Green Technology Innovation Srl, 48011 Alfonsine (RA) (IT)
(72) Inventor: MENGOZZI, Lorenzo, 47122 Forlì (FC) (IT); BALBO, Giorgio, 48015 Cervia (RA) (IT); PIEROTTINI, Candido, 47122 Forlì (FC) (IT); PIRAZZINI, Roberto, 48123 Ravenna (IT)
(74) Representative: Roncuzzi, Davide
(86) International application number: PCT/IB2019/051292
(87) International publication number: WO 2019/159144

(56) References cited:
- EP-A1- 3 733 488
- WO-A1-2014/003636
- DE-A1- 19 721 130
- US-A- 4 350 190
- US-A1- 2002 005 303
- US-A1- 2006 254 840
- US-A1- 2007 284 866
- US-A1- 2010 019 060
- US-A1- 2011 073 026
- US-A1- 2015 352 921
- US-A1- 2015 367 901
- US-A1- 2016 332 681

## Description

The present invention relates to a self-propelled vehicle. In particular, the present invention relates to a self-propelled vehicle moving on wheels carried at end positions by a plurality of arms and equipped for stably transporting bulky loads. More specifically, the present invention refers to a self-propelled vehicle moving on wheels carried at end positions by a plurality of arms and equipped for stably transporting bulky loads and arranged to advance over rough terrain with its loading platform orientated, as desired, and at a distance from the ground definable according to the desire.

### DESCRIPTION OF BACKGROUND ART

In the field of self-propelled vehicles intended for working on rough level terrain or slopes, also in woodland environments to be looked after or deforested, there are two more common structural types, both provided with a control cabin for the operator. In particular, according to a first structural type, the vehicle comprises a front portion, provided with the cabin and supporting an operating arm, and a rear portion, equipped with the power unit and hydraulic system, and coupled to the front portion by an articulated joint. Both of the two portions are provided with large sized twinned wheels, sometimes coupled by a caterpillar track, and both driven, as in the case of the JOHN DEERE 1270E Harvester. According to a different constructional type, the vehicle is structured similarly to an arthropod with multiple arms, four in the case of the KAISER S2 - Mobile Walking Excavator, these arms being arranged peripherally to a platform that carries the operator's cabin. Each of the arms is coupled to the base of the cabin by a ball joint and is provided with a driving wheel at the end position. Two of the arms are telescopic and carry the respective wheel at the end of a first section of the telescopic portion, while the end portion of each telescopic arm, which can be completely contained within the first section, ends with a grappling tip, usable for stabilizing the end of the respective arm in use.

The first type described is particularly unstable if it is necessary to proceed with the two portions angled partly on the level and partly on a slope. Therefore, for stable operation, vehicles of the first type must have the two respective portions (front and rear) substantially aligned and arranged along the line of maximum inclination of the slope on which they must operate, with the cabin located at the front, high up, and the drive part at the rear, lower down. In the case where the cabin is positioned below the drive part, the risk of sliding downwards is maximized. Given the above, it is easy to understand that the gradient of the section on which the vehicle can be used in complete safety based on the load that must be supported, in addition to the type of terrain on which the wheels must grip.

In the case of the arthropod structure, the vehicle can use the telescopic arms to prop itself up and the inclination of the operator's cabin can be adjusted by acting on the extension of these arms. It is easy to understand that this possibility is limited by the extension of the telescopic arms; furthermore, when these arms are extended, the respective wheels are not in contact with the ground, and so the position of the cabin and the operating arm can only be modified to a limited extent with respect to the amount of work.

Furthermore, even though they can be used on more or less steep slopes, in both cases the vehicles are not set up to perform the transportation of bulky loads, such as trunks cut in lengths of several meters for example.

Examples of self-propelled vehicles of the above kind are known from US 2006/254840, US 2015/0367901, US 2016/0332681 and US 2011/073026 which disclose a self-propelled vehicle according to the preamble of claim 1.

Document EP 3 733 488 A1 discloses a state of the art self-propelled vehicle according to Article 54(3) EPC. It shows all features of independent claim 1 with the exception that it does not disclose that both wheels which are connected to one rocker arm are connected to the actuation assembly for their actuation.

Given the above, the problem of having a self-propelled vehicle that can be safely used on rough level terrain or steep slopes for transporting bulky loads, such as trunks or beams for construction purposes, or for working the ground in various ways, for example, deforesting in sections of forest for fire prevention or the timber industry, is currently unsolved and represents an interesting challenge for the applicant, who considers having developed a particularly safe and therefore highly profitable solution to the above-described problem.

In consideration of the above-described situation, it would be useful to have a self-propelled vehicle with the operating capabilities of working the ground and/or transporting bulky masses that overcome the typical drawbacks of the current art described above and define a new standard of vehicles suitable for operating in impervious conditions in complete safety.

### SUMMARY OF INVENTION

The present invention relates to a self-propelled vehicle. The object of the present invention is to provide a self-propelled vehicle moving along wheels, that can be used in complete safety on rough level terrain or steep slopes for transporting bulky loads, such as trunks or beams, with its loading platform orientated horizontally, or as desired, and at a distance from the ground definable, as desired, or for working the ground by means of a given tool.

The above-described problems are resolved by the invention according to the independent claim 1 and any other following claim.

According to the present invention there is provided a self-propelled vehicle according to claim 1, with embodiments thereof as defined by the dependent claims. According to the invention a self-propelled vehicle is produced comprising a box-shaped frame provided with a loading member that extends in a given direction and an actuation assembly carried by said frame; a plurality of arms being hinged to said frame and having an end portion provided with at least one wheel connected to said actuation assembly for drive purposes; characterized in that said arms are hinged so as to adjust, as desired, the orientation and distance of said loading member from said end portions.

According to the invention the loading member is box-shaped and comprises two side members that extend along said given direction and two crossbeams arranged transversally, which geometrically identify a rest surface; said arms are four in number, of which two first arms and two second arms; each said first arm comprising a first lever hinged to one said side member around a first axis transversal to said given direction; each said second arm comprising a second lever hinged to one said side member around a second axis parallel to said first axis.

In some embodiments, each said second arm is hinged parallel and transversal to said second axis.

According to a possible constructional alternative, the vehicle may comprise a monitoring device for monitoring the distribution of masses on said wheels, said monitoring device comprising a measuring member for measuring the load acting on each said end portion to monitor the position of the centre of gravity of said loading member, and of any respective load integral therewith, with respect to said wheels.

According to the invention each said end portion of each said first and second arm carries, in a rotatable manner, a rocker arm provided with two respective ends, each of which being provided with one said wheel; said rocker arm being connected to said actuation assembly for its related operation with respect to said end portion; actuation means being associated with said end portion to adjust the orientation of said rocker arm with respect to said end portion.

According to one possible implementation, each said first arm comprises a third lever hinged to said first lever at an end position around an axis parallel to said first axis and longitudinally delimitated by a said end portion; said first lever being connected to the respective said side member through a first linear actuator to adjust, as desired, an inclination angle of said first lever with respect to said side member; said first lever and said third lever being connected together through a second linear actuator to adjust, as desired, an inclination angle of said third lever with respect to said second lever.

According to one possible constructional alternative, said second lever is connected to the respective said side member through a third linear actuator to adjust, as desired, an inclination angle of said second lever with respect to said side member; each said second arm being equipped with a fourth lever longitudinally delimitated by a said end portion and connected to said second lever through the interposition of a calliper-type member provided with a fifth lever and a sixth lever; said fifth lever being hinged to said second lever around a hinge axis transversal to said second axis and said fourth lever being hinged to said sixth lever around an axis transversal and parallel to said second axis when, in use, said second arm is parallel to the respective said side member; adjusting members for the inclination of said fourth lever being provided for adjusting the inclination of said fifth lever with respect to said second lever and of said fourth lever with respect to said sixth lever.

Advantageously, said adjusting members may comprise a fourth linear actuator arranged between said second lever and said fifth lever, a fifth linear actuator arranged between said fifth lever and said sixth lever and a sixth linear actuator arranged between said sixth lever and said fourth lever.

In some implementations, said actuation assembly comprises a power distribution member connected to each said first linear actuator, second linear actuator, third linear actuator, fourth linear actuator, fifth linear actuator and sixth linear actuator to adjust the position of each of the said corresponding first lever, second lever, third lever, fourth lever, fifth lever and sixth lever, this said power distribution member being electronically controllable.

According to one production alternative, the vehicle may comprise a horizontality sensor, carried by said loading member, to monitor the orientations of said loading member, or at least an accelerometer to monitor the dynamic parameters of said loading member.

According to a further production alternative, the vehicle may comprise a computer, carried by said frame and electronically connected to said monitoring device, said horizontality sensor, said actuation assembly and each said accelerometer, to calculate, in use, static and dynamic parameters of said loading member and any transported load and to determine the operating parameters.

In some implementations, the vehicle may comprise a control device remotely connected to said computer to receive remote commands for said actuation assembly.

According to a production alternative, the vehicle has stabilizing means shaped like a four-bar linkage arranged at an end of a said loading member.

Furthermore, in an advantageous manner said first arms can be front arms and said second arms can be rear arms; said stabilizing means being arranged at the front of said front arms.

### BRIEF DESCRIPTION OF THE DRAWINGS

Further characteristics and advantages of the vehicle according to the present invention will become clearer from the following description, provided with reference to the accompanying drawings which illustrate at least one non-limitative embodiment example and where identical or corresponding parts are identified by the same reference numerals. In particular:
- Figure 1 is a three-dimensional schematic view of a vehicle according to the present invention in a first operating configuration;
- Figure 2 is a side elevation view of Figure 1 with parts removed for the sake of clarity;
- Figure 3 is a side elevation view of Figure 1 on a reduced scale and with parts removed for the sake of clarity in a second operating configuration;
- Figures 4 and 5 shows two details of Figure 3 on an enlarged scale from a viewpoint rotated 180°;
- Figure 6 is a three-dimensional schematic view of Figure 1 in a third operating configuration;
- Figure 7 is a front view of Figure 6;
- Figure 8 is a view of a portion of Figure 1 on an enlarged scale and from a reversed viewpoint; and
- Figures 9 and 10 show views of some details of Figure 8 on a reduced scale, partly in section.

### DETAILED DESCRIPTION OF THE PRESENT INVENTION

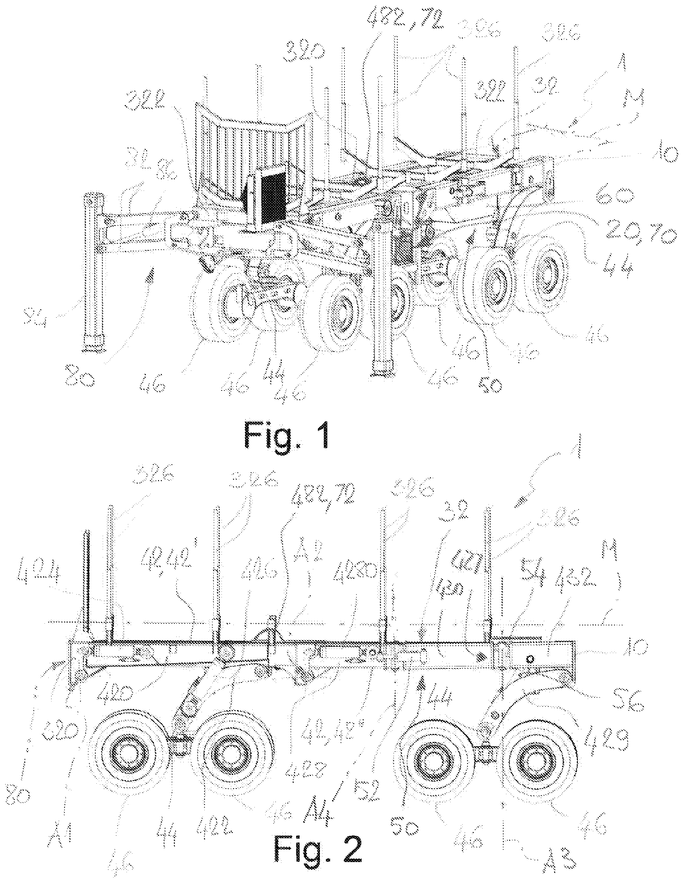

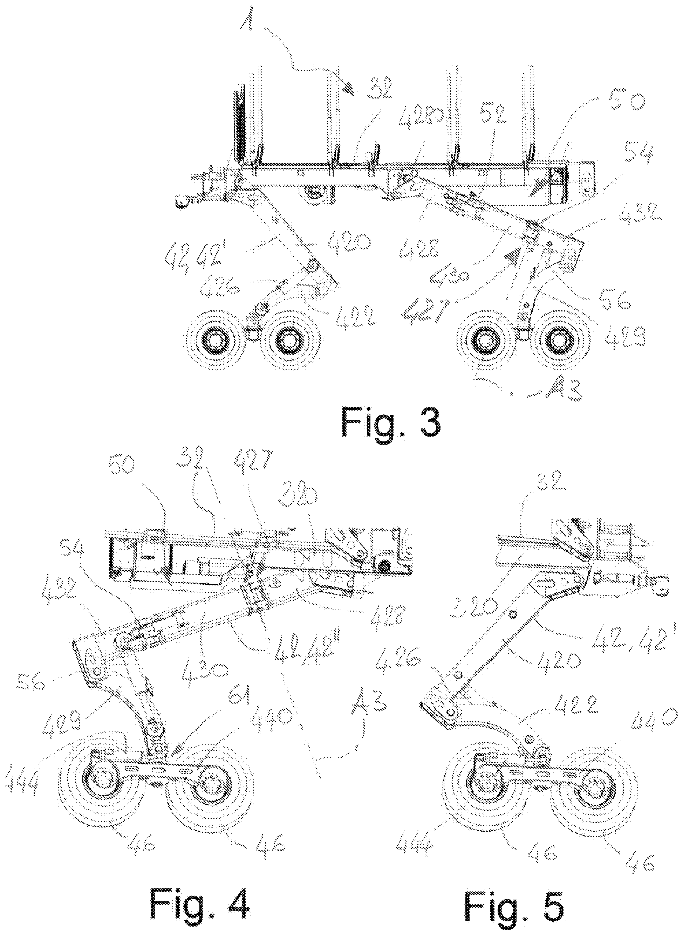

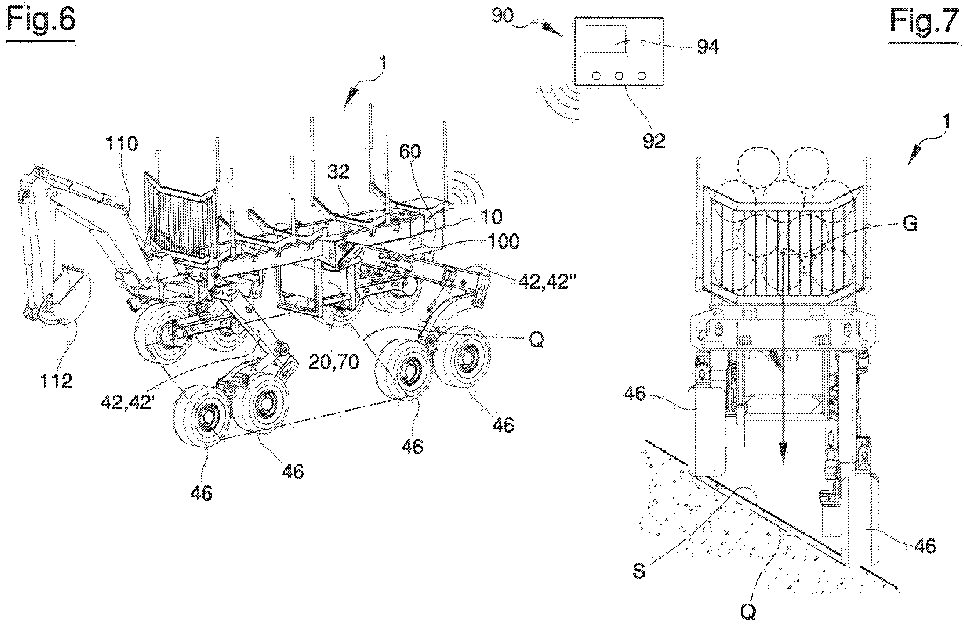

In Figures 1 to 3, reference numeral 1 indicates, as a whole, a self-propelled vehicle, effectively usable on rough level terrain or steep slopes in complete safety for transporting bulky loads, such as trunks or beams for construction purposes, or for working the ground in various ways. The vehicle 1 comprises a box-shaped frame 10 provided with a boxed loading member 32 that extends in a given direction D1 and comprises two side members 320 that develop along a given direction D1 and at least two crossbeams 322 that are arranged transversely to direction D1 and geometrically identify a rest surface M. The vehicle 1 further comprises an actuation assembly 20 (schematically shown as a parallelepiped and only visible in Figures 1 and 6, for drawing conciseness) carried by the frame 10 and a plurality of arms 42, four in the accompanying figures, without this however limiting the scope of the present invention. Each arm 42 is hinged to the frame 10 and has an end portion 44 provided with at least one wheel 46 connected to the actuation assembly 20 to receive drive power in mechanical or hydraulic form, depending on design choices, without this however limiting the scope of the present invention. This actuation assembly 20 can be of the type designed to deliver power in the form of a pressurized fluid, preferably hydraulic oil, or any other form (electrical voltage or other means), without this however limiting the scope of the present invention. On the other hand, it is considered useful to clarify that the term "loading member 32" is suitable to indicate a known loading platform, not shown, which is carried by the side members 320, thus like any load structure, such as, for example, a plurality of cradles 322 shown in the accompanying figures, carried longitudinally at intervals by the side members 320 to support bulky loads, such as, for example, but not limited to, trunks or beams for construction purposes, without this however limiting the scope of the present invention. In particular, each end 324 of each cradle 322 has an associated rod 326 that enables laterally containing long loads such as those described above and to provide sheaves for ropes or ties securing the load.

Referring to Figure 1, the vehicle 1 comprises stabilizer members 80 carried by the frame 10 and shaped like a four-bar linkage and therefore provided with a pair of rocker arms 82 hinged to the frame 10 and a connecting rod 84 that acts as a strut, operated by a linear actuator 86 arranged between the rocker arms 82. In this way, the stabilizer members 80 can be extended transversely at the side of the loading member 32 when it is necessary to increase the transversal stability of the latter and, more in general, of the vehicle 1, or raised to not cause obstruction when the vehicle 1 is moving. In particular, these stabilizer members 80 are located at one end of the loading member 32, at the front in the accompanying figures, without this however limiting the scope of the present invention.

Always according to Figures 1 to 3, the vehicle 1 comprises two first arms 42' arranged at the front, close to the stabilizer members 80, and two second arms 42" arranged at the rear, in particular longitudinally at the opposite end with respect to the stabilizer members 80 and with respect to the first arms 42' . Each first arm 42' comprises a first lever 420 laterally hinged to a side member 320 around a first axis A1 transversal to the given direction D1. Each second arm 42" comprises a second lever 428 laterally hinged to a side member 320 around a second axis A2 parallel to the first axis A1.

Each first arm 42' is only articulated parallel to the first axis A1, while each second arm 42" is articulated parallel and transversal to the second axis A2. Therefore, each first arm 42' is able to move the respective end portion 44 on a plane perpendicular to the surface M that cuts the respective side member 320, and thus also each respective wheel 46, whereas each second arm 42" can move the respective end portion 44 perpendicularly to the surface M and transversely with respect to the side members 320, thus adjusting, as desired, the sideways distance with respect to the respective side member 320.

Always according to Figures 1 to 3, each first arm 42' comprises a third lever 422 that is hinged to the first lever 420 at an end position around an axis parallel to the first axis A1 and is longitudinally delimitated by an end portion 44. The first lever 420 is connected to the respective side member 320 through a first linear actuator 424 to adjust, as desired, an inclination angle of the first lever 420 with respect to the side member 320. The first lever 420 and the third lever 422 are connected together by a second linear actuator 426, the function of which, in use, is to adjust, as desired, an inclination angle of the third lever 422 with respect to the second lever 420.

Always according to Figure 1, the second lever 428 is connected to the respective side member 320 through a third linear actuator 4280 to adjust, as desired, an inclination angle thereof with respect to the side member 320. Each second arm 42" is provided with a fourth lever 429 longitudinally delimitated by an end portion 44 that is connected to the second lever 428 through the interposition of a calliper-type member 427. This calliper-type member 427 comprises a fifth lever 430 and a sixth lever 432 hinged together around a hinge axis A3 transversal to the second axis A2. The fifth lever 430 is hinged to the second lever 428 around an axis parallel to the hinge axis A3 and the sixth lever 432 is hinged to the fifth lever 430 around an axis parallel to the hinge axis A3, while the fourth lever 429 is hinged to the sixth lever 432 around an axis transversal and parallel to the second axis A2 when, in use, the second arm 42" is parallel to the side members 320. For each second arm 42", there are associated adjusting members 50 for adjusting the inclination of the fourth lever 429 with respect to the side member 320 and to the calliper-type member 427. In particular, these adjusting members 50 comprise a fourth linear actuator 52 arranged between the second lever 428 and the fifth lever 430, a fifth linear actuator 54 arranged between the fifth lever 430 and the sixth lever 432 and a sixth linear actuator 56 that connects the fourth lever 429 to the sixth lever 432.

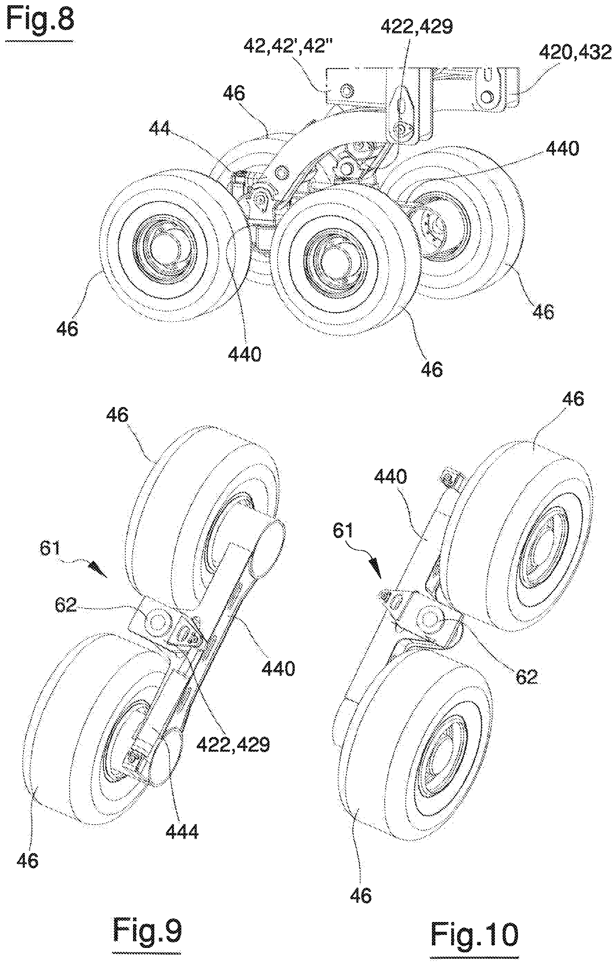

With particular reference to Figures 8 to 10, each end portion 44 of each first arm 42' and of each second arm 42" carries, in a rotatable manner, a rocker arm 440 provided with two respective ends 442. Each end 442 is provided with a wheel 46 and the rocker arm 440 is connected to the actuation assembly 20 (in a known manner and not shown for drawing conciseness) for its related operation with respect to the respective end portion 44. In particular, each end portion 44 has an associated actuation member 444 connected to the actuation assembly 20, the function of which is to adjust an orientation of the corresponding rocker arm 440 with respect to the associated end portion 44.

Referring to Figures 1 and 2, the actuation assembly 20 further comprises an electronically controllable power distribution member 70 (integrated in the actuation assembly 20, and therefore only visible in Figures 1 and 6) connected in a known manner, not shown (for drawing conciseness), to each first linear actuator 424, second linear actuator 426, third linear actuator 4280, fourth linear actuator 52, fifth linear actuator 54 and sixth linear actuator 56, to adjust the orientation of each of the corresponding first lever 420, third lever 422, second lever 428, fourth lever 429, fifth lever 430, sixth lever 432, actuation member 444 and the respective wheels 46 to transmit operating power in mechanical or hydraulic form, depending on design choices and the preferred modes of using the vehicle 1, without this however limiting the scope of the present invention.

In the case where useful for operational requirements, on each pair of wheels 46 carried by one and the same rocker arm 440 there can be a corresponding caterpillar track (known and not shown) that kinematically couples them. The vehicle 1 comprises an electronic horizontality sensor 482 associated with the loading member 32, preferably in a central position with respect to the side members 320 and to the two crossbeams 322, without this however limiting the scope of the present invention. The function of this sensor 482 is to constantly monitor the orientations of the loading member 32. Furthermore, a monitoring device 61 is associated with each end portion 44 for monitoring the distribution of masses on the wheels 46, where this monitoring device 61 comprises a measuring member 62 for measuring the load acting on the respective end portion 44. In addition, at least one accelerometer 72 is associated with the loading member 32 for the purposes of monitoring dynamic parameters of the same loading member 32 and, consequently, of the load associate therewith. For practicality and drawing conciseness, the accelerometer 72 is only shown in Figures 1 and 2 and incorporated with the sensor 482, without this however limiting the scope of the present invention.

According to Figures 1 and 6, the vehicle 1 comprises a computer 60 carried at the rear by the frame 10. The computer 60 is electronically connected (in a known manner and not shown for drawing conciseness) to the monitoring device 61, the horizontality sensor 482, the actuation assembly 20 (and therefore to the power distribution member 70, each actuation member 444 and each wheel 46) and to each accelerometer 72 to calculate, in use, static and dynamic parameters of the loading member 32 and any transported load and, therefore, is arranged to enable the autonomous driving of the vehicle 1. In particular, the computer 60 is arranged to constantly monitor the current position of a centre of gravity G (visible only in Figure 7) of the loading member 32, possibly supporting a load made integral therewith, with respect to the configuration of the arms 42' e 42", and therefore the geometry traced on the ground by the wheels 46, substantially a quadrilateral Q (Figure 6) that represents the area inside which the vertical projection of the centre of gravity G must be contained under all operating conditions (of the vehicle 1) to ensure stability thereof on the ground.

With particular reference to Figure 6, the vehicle 1 comprises a control device 90 for remotely exchanging information with an operator. In particular, this control device 90 comprises a remote control 92, provided with a viewer 94 and connected to the computer 60 via electromagnetic waves, and is set up to provide data on the operating conditions of the vehicle 1 and receive remote control commands for the actuation assembly 20.

Always regarding the above, the computer 60 is set up to automatically define operational parameters for the power distribution member 70 so as advance the loading member 32 on slopes S along inclined directions D2 with the first and the second arms 42' and 42" configured so as maintain the loading member 32 orientated according to a substantially horizontal direction D3, or orientated in any other manner, depending on the size of the respective components.

Use of the vehicle 1 is easily understood from that described above and does not require further explanation. On the other hand, with particular reference to Figures 6 and 7, it may be useful to clarify that the particular articulated structure of the front arms 42' and rear arms 42', the presence of first linear actuators 424, second linear actuators 426, third linear actuators 4280, fourth linear actuators 52, fifth linear actuators 54 and sixth linear actuators 56, as well as the possibility of adjusting the orientation of the rocker arms 440 provided with two respective ends 442, each provided with a respective wheel 46, enables adjusting the spatial orientation of the loading member 32, and the relative distance from the respective end portions 44 or, if preferred, from the ground, as a result of the distance, from the ground, of the articulations between the side members 320 and the first levers 420 of the front arms 42' and between these side members 320 and the second levers 428 of the rear arms 42". In particular, these specific mechanics enable adjusting the position of the centre of gravity G of the combination of the loading member 32 and any load with respect to the wheels 46 in such a way that the vehicle 1 operates on a slope S with the respective wheels 46 arranged edgeways (Figures 6 and 7) with respect to the maximum gradient, totally similar to how skis are orientated by a skier who prefers to handle steep slopes by cutting diagonally, to maximize specific pressure on the path taken and thus the adherence and stability of the position and the control of its evolution whilst carrying out work. Furthermore, these characteristics enable, in use, to always have holds on the ground downhill of the centre of gravity of the combination of the vehicle 1 and the associated load (a centre of gravity that is therefore always uphill of the wheels 46 of the vehicle 1 arranged downhill), both in static conditions and in dynamic conditions, to the advantage of the stability of the vehicle 1, conditions however that can be objectively verified through the calculations performed on the data that the computer 60 receives every moment from the sensor 482 and from the accelerometers 72.

Finally, it is clear that modifications and variations can be made to the vehicle 1 set forth herein without departing from the scope of the present invention.

For example, referring only to Figure 6, in the case where the vehicle 1 was provided with a global positioning device 100 (GPS) electronically connected to the computer 60, it would allow having constant information on the geographic coordinates of where the vehicle 1 is located, and consequently drive the vehicle 1 on given routes. If a vision and telemetry system was also associated with the GPS, in addition to a robotic arm 110 that can be equipped with cutting and/or gripping devices (known and not shown) for elongated elements, it would be possible to perform deforesting operations and the loading and unloading of trunks or portions of trunks on the loading member 32. Otherwise, in the case where an excavation member, such as a bucket 112 was associated with the robotic arm 110, then the vehicle 1 could also be used to clear areas of vegetation in order to make firebreaks, extremely useful in the event of fires on steep slopes where other types of vehicles would not be able to operate due to the problems previously described in the description of prior art. Given the above, the self-propelled vehicle 1 has constructional and structural characteristics that give operational capabilities for working the ground and/or transportation of bulky masses that overcome the above-described typical drawbacks of the known art.

## Claims

1. A self-propelled vehicle (1) comprising a box-shaped frame (10) provided with a loading member (32), extending in a given direction (D1), and with an actuation assembly (20), carried by said frame (10); a plurality of arms (42) being hinged to said frame (10) and having an end portion (44) provided with at least a wheel (46), said wheel being connected to said actuation assembly (20) for the actuation thereof; wherein said arms (42) are hinged to said frame (10) and are articulated so as to adjust, as desired, the orientation and the distance of said loading member (32) with respect to said end portions (44), wherein said loading member (32) is box-shaped and comprises two side members (320) extending according to said given direction (D1) and two crossbeams (322) arranged transversally and geometrically identifying a rest surface (M); said arms (42) being four, i.e. two first arms (42') and two second arms (42"); each said first arm (42') comprising a first lever (420) hinged to one said side member (320) around a first axis (A1) transverse to said given direction (D1); each said second arm (42") comprising a second lever (428) hinged to one said side member (320) around a second axis (A2) parallel to said first axis (A1) **characterized in that** each of said end portions (44) of each of said first and second arms (42') (42") carries, in a rotatable manner, a rocker arm (440) provided with two respective ends (442), each of which being provided with one said wheel (46), actuation means (444) being associated with said end portion (44) and connected to said actuation assembly (20) to adjust an orientation of said rocker arm (440) with respect to said end portion (44).

2. The vehicle according to claim 1, **characterized in that** each said second arm (42") is articulated parallel and transversal to said second axis (A2).

3. The vehicle according to any one of the previous claims, **characterized by** comprising a monitoring device (61) for monitoring the distribution of masses on said wheels (46), said monitoring device (61) comprising a measuring member (62) for measuring the load acting on each said end portion (44) to monitor the position of the centre of gravity of said loading member (32), and of any respective load integral thereto, with respect to said wheels (46).

4. The vehicle according to any one of claims 1 to 3, **characterized in that** each said first arm (42') comprises a third lever (422) hinged to said first lever (420) in end position around an axis parallel to said first axis (A1) and longitudinally delimited by one said end portion (44); said first lever (420) being connected to said respective side member (320) through a first linear actuator (424) to adjust, as desired, an inclination angle of said first lever (420) with respect to said side member (320); said first lever (420) and said third lever (422) being connected together by a second linear actuator (426) to adjust, as desired, an inclination angle of said third lever (422) with respect to said second lever (420).

5. The vehicle according to claim 4, **characterized in that** said second lever (428) is connected to said respective side member (320) through a third linear actuator (4280) to adjust, as desired, an inclination angle of said second lever (428) with respect to said side member (320); each said second arm (42") being provided with a fourth lever (429) longitudinally delimited by one said end portion (44) and coupled to said second lever (428) through the interposition of a calliper-type member (427) provided with a fifth lever (430) and a sixth lever (432); said fifth lever (430) being hinged to said second lever (428) around a hinge axis (A3) transverse to said second axis (A2) and said fourth lever (429) being hinged to said sixth lever (432) around an axis transverse and parallel to said second axis (A2) when, in use, said second arm (42") is parallel to said respective side member (320); adjusting members (50) for the inclination of said fourth lever (429) being provided for adjusting the inclination of said fifth lever (430) with respect to said second lever (428) and of said fourth lever (429) with respect to said sixth lever (432) .

6. The vehicle according to claim 5, **characterized in that** said adjusting members (50) comprise a fourth linear actuator (52) arranged between said second lever (428) and said fifth lever (430), a fifth linear actuator (54) arranged between said fifth lever (430) and said sixth lever (432), and a sixth linear actuator (56) arranged between said sixth lever (432) and said fourth lever (429).

7. The vehicle according to claim 6, **characterized in that** said actuation assembly (20) comprises a power distribution member (70) connected to each said first linear actuator (424), second linear actuator (426), third linear actuator (4280), fourth linear actuator (52), fifth linear actuator (54), sixth linear actuator (56) to adjust the position of each of the said corresponding first lever (420), second lever (428), third lever (422), fourth lever (429), fifth lever (430), sixth lever (432), said power distribution member (70) being electronically controllable.

8. The vehicle according to claim 7, **characterized by** comprising a horizontality sensor (482) carried by said loading member (32) to monitor the orientations of said loading member (32).

9. The vehicle according to any one of the previous claims, **characterized by** comprising at least an accelerometer (72) to monitor dynamic parameters of said loading member (32).

10. The vehicle according to the claims 7, 8, and 9, **characterized by** comprising a computer (62) carried by said frame (10) and electronically connected to said monitoring device (61), to said horizontality sensor (482), to said actuation assembly (20) and to each said accelerometer (72) to calculate, in use, static and dynamic parameters of said loading member (32) and of any load transported and to determine operating parameters.

11. The vehicle according to claim 10, **characterized by** comprising a control device (90) remotely connected to said computer (60) to exchange operational information and to remotely control said actuation assembly (20) through a respective remote control (92).

12. The vehicle according to any one of the previous claims, **characterized by** having stabilizing means (80) shaped like a four-bar linkage arranged at an end of said loading member (32).

13. The vehicle according to claim 12, **characterized in that** said first arms (42') are front arms and said second arms (42'') are rear arms; said stabilizing means (80) being arranged at the front of said front arms (42').

## Patentansprüche

1. Selbstfahrendes Fahrzeug (1), umfassend einen kastenförmigen Rahmen (10), der mit einem Ladeelement (32), das sich in einer gegebenen Richtung (D1) erstreckt, und mit einer Antriebsbaugruppe (20), die durch den Rahmen (10) getragen wird, versehen ist; eine Vielzahl von Armen (42), die an dem Rahmen (10) angelenkt sind und einen Endabschnitt (44) aufweisen, der mit mindestens einem Rad (46) versehen ist, wobei das Rad für den Antrieb desselben mit der Antriebsbaugruppe (20) verbunden ist; wobei die Arme (42) an den Rahmen (10) angelenkt sind und ein Gelenk bilden, um so, wie gewünscht, die Ausrichtung und den Abstand des Ladeelements (32) in Bezug auf die Endabschnitte (44) einzustellen, wobei das Ladeelement (32) kastenförmig ist und zwei Längsträger (320), die sich entsprechend der gegebenen Richtung (D1) erstrecken, und zwei Querträger (322), die quer angeordnet sind und geometrisch eine Auflagefläche (M) bestimmen, umfasst; wobei die Arme (42) vier, d. h., zwei erste Arme (42') und zwei zweite Arme (42") sind; wobei jeder erste Arm (42') einen ersten Hebel (420) umfasst, der an einen Längsträger (320) um eine erste Achse (A1), quer zu der gegebenen Richtung (D1), angelenkt ist; wobei jeder zweite Arm (42") einen zweiten Hebel (428) umfasst, der an einen Längsträger (320) um eine zweite Achse (A2), parallel zu der ersten Achse (A1), angelenkt ist, **dadurch gekennzeichnet, dass** jeder der Endabschnitte (44) der ersten und der zweiten Arme (42') (42"), auf eine drehbare Weise, einen Schwinghebel (440) trägt, der mit zwei jeweiligen Enden (442) versehen ist, deren jedes mit einem Rad (46) versehen ist, wobei Antriebsmittel (444) mit dem Endabschnitt (44) verknüpft und mit der Antriebsbaugruppe (20) verbunden sind, um eine Ausrichtung des Schwinghebels (440) in Bezug auf den Endabschnitt (44) einzustellen.

2. Fahrzeug nach Anspruch 1, **dadurch gekennzeichnet, dass** jeder zweite Arm (42") parallel und quer zu der zweiten Achse (A2) angelenkt ist.

3. Fahrzeug nach einem der vorhergehenden Ansprüche, **dadurch gekennzeichnet, dass** sie eine Überwachungseinrichtung (61) zum Überwachen der Massenverteilung auf den Rädern (46) umfasst, wobei die Überwachungseinrichtung (61) ein Messinstrument (62) zum Messen der Last, die auf jeden Endabschnitt (44) wirkt, umfasst, um die Position des Schwerpunkts des Ladeelements (32) und jeder damit integralen Last in Bezug auf die Räder (46), zu messen.

4. Fahrzeug nach einem der Ansprüche 1 bis 3, **dadurch gekennzeichnet, dass** jeder erste Arm (42') einen dritten Hebel (422) umfasst, der an den ersten Hebel (420) in Endposition um eine Achse, parallel zu der ersten Achse (A1), und in Längsrichtung begrenzt durch den Endabschnitt (44), angelenkt ist; wobei der erste Hebel (420) mit dem jeweiligen Längsträger (320) durch einen ersten linearen Stellantrieb (424) verbunden ist, um, wie gewünscht, einen Neigungswinkel des ersten Hebels (420) in Bezug auf den Längsträger(320) einzustellen; wobei der erste Hebel (420) und der dritte Hebel (422) durch einen zweiten linearen Stellantrieb (426) miteinander verbunden sind, um, wie gewünscht, einen Neigungswinkel des dritten Hebels (422) in Bezug auf den zweiten Hebel (420) einzustellen.

5. Fahrzeug nach Anspruch 4, **dadurch gekennzeichnet, dass** der zweite Hebel (428) mit dem jeweiligen Längsträger (320) durch einen dritten linearen Stellantrieb (4280) verbunden ist, um, wie gewünscht, einen Neigungswinkel des zweiten Hebels (428) in Bezug auf den Längsträger (320) einzustellen; wobei jeder zweite Arm (42") mit einem vierten Hebel (429) versehen ist, in Längsrichtung begrenzt durch einen Endabschnitt (44) und an den zweiten Hebel (428) gekoppelt durch die Zwischenschaltung eines zirkelartigen Elements (427), das mit einem fünften Hebel (430) und einem sechsten Hebel (432) versehen ist; wobei der fünfte Hebel (430) an den zweiten Hebel (428) um eine Gelenkachse (A3), quer zu der zweiten Achse (A2), angelenkt ist und der vierte Hebel (429) an den sechsten Hebel (432) um eine Achse, quer und parallel zu der zweiten Achse (A2), angelenkt ist, wenn, bei Anwendung, der zweite Arm (42") parallel zu dem jeweiligen Längsträger (320) ist; wobei Einstellelemente (50) für die Neigung des vierten Hebels (429) zum Einstellen der Neigung des fünften Hebels (430) in Bezug auf den zweiten Hebel (428) und des vierten Hebels (429) in Bezug auf den sechsten Hebel (432) bereitgestellt werden.

6. Fahrzeug nach Anspruch 5, **dadurch gekennzeichnet, dass** die Einstellelemente (50) einen vierten linearen Stellantrieb (52), der zwischen dem zweiten Hebel (428) und dem fünften Hebel (430) angeordnet ist, einen fünften linearen Stellantrieb (54), der zwischen dem fünften Hebel (430) und dem sechsten Hebel (432) angeordnet ist, und einen sechsten linearen Stellantrieb (56), der zwischen dem sechsten Hebel (432) und dem vierten Hebel (429) angeordnet ist, umfassen.

7. Fahrzeug nach Anspruch 6, **dadurch gekennzeichnet, dass** die Antriebsbaugruppe (20) ein Leistungsverteilungselement (70) umfasst, das mit jedem ersten linearen Stellantrieb (424), zweiten linearen Stellantrieb (426), dritten linearen Stellantrieb (4280), vierten linearen Stellantrieb (52), fünften linearen Stellantrieb (54), sechsten linearen Stellantrieb (56) verbunden ist, um die Position jedes der entsprechenden ersten Hebel (420), zweiten der Hebel (428), dritten Hebel (422), vierten Hebel (429), fünften Hebel (430), sechsten Hebel (432) einzustellen, wobei das Leistungsverteilungselement (70) elektronisch steuerbar ist.

8. Fahrzeug nach Anspruch 7, **dadurch gekennzeichnet, dass** es einen Horizontalitätssensor (482) umfasst, der durch das Ladeelement (32) getragen wird, um die Ausrichtungen des Ladeelements (32) zu überwachen.

9. Fahrzeug nach einem der vorhergehenden Ansprüche, **dadurch gekennzeichnet, dass** es mindestens einen Beschleunigungsmesser (72) umfasst, um dynamische Parameter des Ladeelements (32) zu überwachen.

10. Fahrzeug nach Anspruch 7, 8 und 9, **dadurch gekennzeichnet, dass** es einen Computer (62) umfasst, der durch den Rahmen (10) getragen wird und elektronisch mit der Überwachungseinrichtung (61), mit dem Horizontalitätssensor (482), mit der Antriebsbaugruppe (20) und mit dem Beschleunigungsmesser (72) verbunden ist, um, bei Anwendung, statische und dynamische Parameter des Ladeelements (32) und jeglicher beförderten Last zu berechnen und Betriebsparameter zu bestimmen.

11. Fahrzeug nach Anspruch 10, **dadurch gekennzeichnet, dass** es eine Steuerungseinrichtung (90) umfasst, die entfernt mit dem Computer (60) verbunden ist, um Betriebsinformationen auszutauschen und um die Antriebsbaugruppe (20) durch eine jeweilige Fernsteuerung (92) fernzusteuern.

12. Fahrzeug nach einem der vorhergehenden Ansprüche, **dadurch gekennzeichnet, dass** es Stabilisierungsmittel (80) aufweist, die wie ein Vier-Stab-Gestänge geformt sind, das an einem Ende des Ladeelements (32) angeordnet ist.

13. Fahrzeug nach Anspruch 12, **dadurch gekennzeichnet, dass** die ersten Arme (42') vordere Arme sind und die zweiten Arme (42") hintere Arme sind, wobei die Stabilisierungsmittel (80) an der Vorderseite der vorderen Arme (42') angeordnet sind.

## Revendications

1. Véhicule autopropulsé (1) comprenant un châssis en forme de boîte (10) muni d'un élément de chargement (32), s'étendant dans une direction donnée (Dl), et d'un ensemble d'actionnement (20), porté par ledit châssis (10); une pluralité de bras (42) étant articulés audit châssis (10) et ayant une partie d'extrémité (44) munie d'au moins une roue (46), ladite roue étant reliée audit ensemble d'actionnement (20) pour son actionnement; lesdits bras (42) étant articulés audit châssis (10) et étant articulés de façon à ajuster, comme on le souhaite, l'orientation et la distance dudit élément de chargement (32) par rapport auxdites parties d'extrémité (44), ledit élément de chargement (32) étant en forme de boîte et comprenant deux éléments latéraux (320) s'étendant selon ladite direction donnée (Dl) et deux traverses (322) disposées transversalement et identifiant géométriquement une surface de repos (M); lesdits bras (42) étant au nombre de quatre, à savoir deux premiers bras (42') et deux seconds bras (42"); chaque premier bras (42') comprenant un premier levier (420) articulé à l'un desdits éléments latéraux (320) autour d'un premier axe (A1) transversal à ladite direction donnée (Dl); chaque second bras (42") comprenant un deuxième levier (428) articulé à l'un desdits éléments latéraux (320) autour d'un second axe (A2) parallèle audit premier axe (A1), **caractérisé par le fait que** chacune desdites parties d'extrémité (44) de chacun desdits premier et second bras (42') (42") porte, de manière rotative, un bras oscillant (440) muni de deux extrémités respectives (442), dont chacune est munie d'une roue (46), des moyens d'actionnement (444) étant associés à ladite partie d'extrémité (44) et reliés audit ensemble d'actionnement (20) pour ajuster une orientation dudit bras oscillant (440) par rapport à ladite partie d'extrémité (44).

2. Véhicule selon la revendication 1, **caractérisé par le fait que** chaque second bras précité (42") est articulé parallèlement et transversalement audit second axe (A2).

3. Véhicule selon l'une quelconque des revendications précédentes, **caractérisé par le fait qu'**il comprend un dispositif de surveillance (61) pour surveiller la distribution de masses sur lesdites roues (46), ledit dispositif de surveillance (61) comprenant un élément de mesure (62) pour mesurer la charge agissant sur chacune partie d'extrémité précitée (44) pour surveiller la position du centre de gravité dudit élément de chargement (32), et de toute charge respective qui lui est solidaire, par rapport auxdites roues (46).

4. Véhicule selon l'une quelconque des revendications 1 à 3, **caractérisé par le fait que** chaque premier bras précité (42') comprend un troisième levier (422) articulé audit premier levier (420) en position finale autour d'un axe parallèle audit premier axe (A1) et délimité longitudinalement par une partie d'extrémité précitée (44); ledit premier levier (420) étant relié audit élément latéral respectif (320) par l'intermédiaire d'un premier actionneur linéaire (424) pour ajuster, comme on le souhaite, un angle d'inclinaison dudit premier levier (420) par rapport audit élément latéral (320); ledit premier levier (420) et ledit troisième levier (422) étant reliés ensemble par un deuxième actionneur linéaire (426) pour ajuster, comme on le souhaite, un angle d'inclinaison dudit troisième levier (422) par rapport audit deuxième levier (420) .

5. Véhicule selon la revendication 4, **caractérisé par le fait que** ledit deuxième levier (428) est relié audit élément latéral respectif (320) par l'intermédiaire d'un troisième actionneur linéaire (4280) pour ajuster, comme on le souhaite, un angle d'inclinaison dudit deuxième levier (428) par rapport audit élément latéral (320); chaque second bras précité (42") étant muni d'un quatrième levier (429) délimité longitudinalement par une partie d'extrémité précitée (44) et couplé audit deuxième levier (428) par l'intermédiaire de l'interposition d'un élément de type étrier (427) muni d'un cinquième levier (430) et d'un sixième levier (432); ledit cinquième levier (430) étant articulé audit deuxième levier (428) autour d'un axe d'articulation (A3) transversal audit second axe (A2) et ledit quatrième levier (429) étant articulé audit sixième levier (432) autour d'un axe transversal et parallèle audit second axe (A2) lorsque, en utilisation, ledit second bras (42") est parallèle audit élément latéral respectif (320); des éléments de réglage (50) pour l'inclinaison dudit quatrième levier (429) étant prévus pour ajuster l'inclinaison dudit cinquième levier (430) par rapport audit deuxième levier (428) et dudit quatrième levier (429) par rapport audit sixième levier (432).

6. Véhicule selon la revendication 5, **caractérisé par le fait que** lesdits éléments de réglage (50) comprennent un quatrième actionneur linéaire (52) disposé entre ledit deuxième levier (428) et ledit cinquième levier (430), un cinquième actionneur linéaire (54) disposé entre ledit cinquième levier (430) et ledit sixième levier (432), et un sixième actionneur linéaire (56) disposé entre ledit sixième levier (432) et ledit quatrième levier (429).

7. Véhicule selon la revendication 6, **caractérisé par le fait que** ledit ensemble d'actionnement (20) comprend un élément de distribution d'énergie (70) relié à chacun desdits premier actionneur linéaire (424), deuxième actionneur linéaire (426), troisième actionneur linéaire (4280), quatrième actionneur linéaire (52), cinquième actionneur linéaire (54) et sixième actionneur linéaire (56) pour ajuster la position de chacun desdits premier levier (420), deuxième levier (428), troisième levier (422), quatrième levier (429), cinquième levier (430) et sixième levier (432) correspondants, ledit élément de distribution d'énergie (70) étant contrôlable électroniquement.

8. Véhicule selon la revendication 7, **caractérisé par le fait qu'**il comprend un capteur d'horizontalité (482) porté par ledit élément de chargement (32) pour surveiller les orientations dudit élément de chargement (32).

9. Véhicule selon l'une quelconque des revendications précédentes, **caractérisé par le fait qu'**il comprend au moins un accéléromètre (72) pour surveiller des paramètres dynamiques dudit élément de chargement (32).

10. Véhicule selon les revendications 7, 8 et 9, **caractérisé par le fait qu'**il comprend un ordinateur (62) porté par ledit châssis (10) et connecté électroniquement audit dispositif de surveillance (61), audit capteur d'horizontalité (482), audit ensemble d'actionnement (20) et à chaque accéléromètre (72) pour calculer, en utilisation, des paramètres statiques et dynamiques dudit élément de chargement (32) et de toute charge transportée et pour déterminer des paramètres de fonctionnement.

11. Véhicule selon la revendication 10, **caractérisé par le fait qu'**il comprend un dispositif de commande (90) connecté à distance audit ordinateur (60) pour échanger des informations de fonctionnement et pour commander à distance ledit ensemble d'actionnement (20) par l'intermédiaire d'une télécommande respective (92).

12. Véhicule selon l'une quelconque des revendications précédentes, **caractérisé par le fait qu'**il a des moyens de stabilisation (80) en forme de quadrilatère articulé, disposés à une extrémité dudit élément de chargement (32).

13. Véhicule selon la revendication 12, **caractérisé par le fait que** lesdits premiers bras (42') sont des bras avant et lesdits seconds bras (42") sont des bras arrière; lesdits moyens de stabilisation (80) étant disposés à l'avant desdits bras avant (42').
